# EUROPEAN PATENT APPLICATION

(11) **EP 4 346 248 A1**
(43) Date of publication of application: **03.04.2024**
(21) Application number: 23198501.1
(22) Date of filing: 20.09.2023
(51) Int. Cl.: H04W 4/46

(54) **SYSTEM AND METHOD FOR VEHICLE COMMUNICATIONS**

(30) Priority: 30.09.2022 US 202217937230
(71) Applicant: Harman International Industries, Inc., Stamford, Connecticut 06901 (US)
(72) Inventor: MADHAIYAN, Kirubasankar, 560068 Bangalore (IN); NAGA, Prasanna Kumar Bolisetty Yeswanth, 560066 Bangalore (IN)
(74) Representative: Kraus & Lederer PartGmbB

(57) **Abstract**

Methods and systems are provided for vehicle communications for vehicle aid requests. In one or more embodiments, a method includes monitoring a vehicle for a triggering event, and responsive to detection of the triggering event, generating, via a Vehicle-to-Everything (V2X) communication module of the vehicle, a Basic Safety Message (BSM) in accordance with SAE Surface Vehicle Standard J2735 including a vehicle aid request signature.

## Description

### FIELD

The disclosure relates to vehicle communications, and in particular, to vehicle aid request messages.

### BACKGROUND

Motorized vehicles, such as electric vehicles and/or automobiles powered by an internal combustion engine, may sometimes be subject to conditions in which aid from an outside entity is desired. Vehicles may become immobilized or disabled, for example, and/or an occupant of a vehicle may experience conditions in which medical attention is desired. Often, a request for aid from a first responder is provided by a pedestrian or other observer, and/or by an occupant of the vehicle, via a mobile device such as a cellular phone. However, in some situations, the vehicle occupants may not have a cellular phone and/or may be unable to place the request for aid. Further, in some situations, there may not be a pedestrian or other observer available to request aid. As a result, an amount of time for the vehicle and/or occupants to receive aid may be increased, which may increase a likelihood of escalation of the undesired vehicle conditions and/or occupant medical conditions.

### SUMMARY

In one or more embodiments, a method may comprise monitoring a vehicle for a triggering event, and responsive to detection of the triggering event, first generating, and then transmitting, e.g., via a Vehicle-to-Everything (V2X) communication module of the vehicle, a Basic Safety Message (BSM) in accordance with the Society of Automotive Engineers International (SAE) Surface Vehicle Standard J2735 including a vehicle aid request signature. The triggering event may be selected from a group consisting of a user-initiated vehicle aid request and a concurrent occurrence of a plurality of vehicle events.

In one or more embodiments, a method may comprise first receiving, then processing, a V2X BSM in accordance with SAE Surface Vehicle Standard J2735 to retrieve a vehicle aid request signature stored within the BSM, and responsive to retrieving the vehicle aid request signature from the BSM, routing data included by the BSM to an external device over a wireless communication network. The data routed to the external device may include vehicle location information.

In one or more embodiments, a system may comprise a transceiver, one or more first processors, and a first non-transitory memory including instructions stored thereon that when executed, cause the one or more first processors to monitor a condition of a vehicle for a triggering event, and responsive to detection of the triggering event, generate and transmit a V2X BSM including a vehicle aid request signature. The system may further comprise a receiver, one or more second processors electronically coupled to the receiver, and a second non-transitory memory including instructions stored thereon that when executed, cause the one or more second processors to process the BSM to retrieve the vehicle aid request signature and vehicle location information via the one or more second processors responsive to receiving the BSM via the receiver.

### BRIEF DESCRIPTION OF THE DRAWINGS

The disclosure may be better understood from reading the following description of non-limiting embodiments, with reference to the attached drawings, wherein below:
FIG. 1 shows a diagram illustrating a first vehicle Basic Safety Message (BSM) communication scenario, in accordance with one or more embodiments of the present disclosure;
FIG. 2 shows a diagram illustrating a second vehicle BSM communication scenario, in accordance with one or more embodiments of the present disclosure;
FIG. 3 shows a diagram illustrating a third vehicle BSM communication scenario, in accordance with one or more embodiments of the present disclosure;
FIG. 4 shows a framework of a Vehicle-to-Everything (V2X) communication including a BSM storing a vehicle aid request signature, in accordance with one or more embodiments of the present disclosure;
FIG. 5 shows vehicle aid request signatures that may be stored within a BSM communication of a vehicle, in accordance with one or more embodiments of the present disclosure;
FIG. 6 shows an example partial view of a vehicle cabin including a vehicle aid request user interface device, in accordance with one or more embodiments of the present disclosure;
FIG. 7 shows a block diagram of an example in-vehicle computing system of a vehicle configured to generate a BSM including a vehicle aid request signature, in accordance with one or more embodiments of the present disclosure;
FIG. 8 shows a flow chart illustrating a method for controlling V2X communications of a vehicle, in accordance with one or more embodiments of the present disclosure.

### DETAILED DESCRIPTION

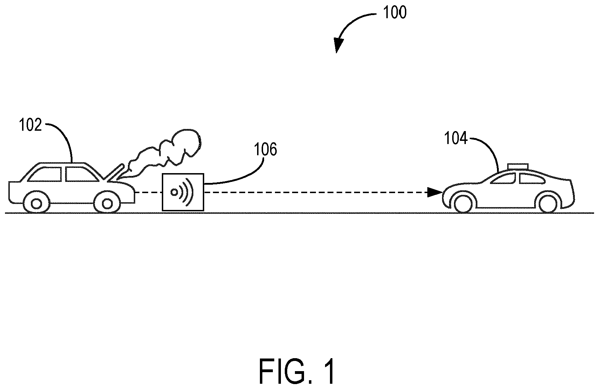

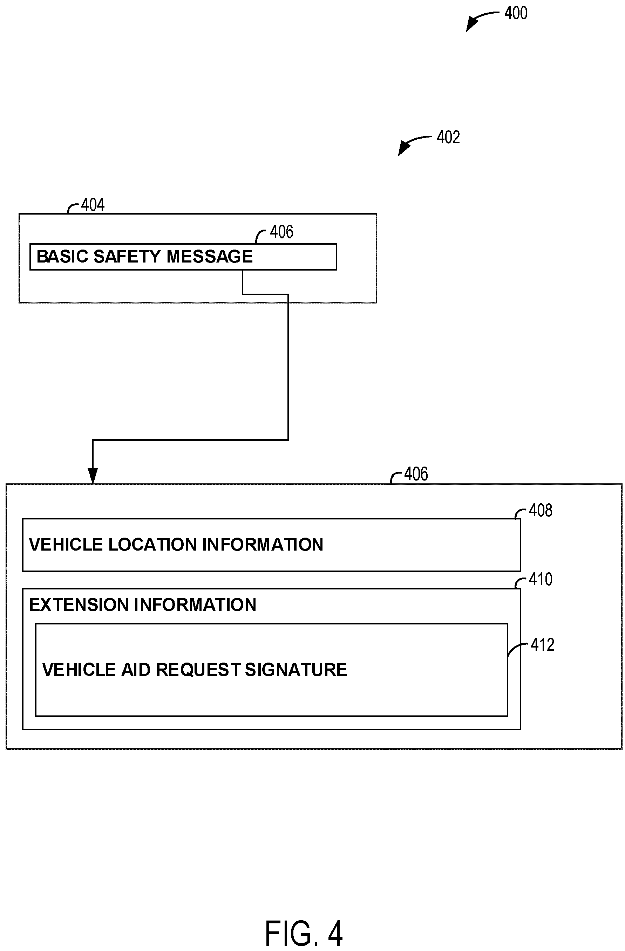

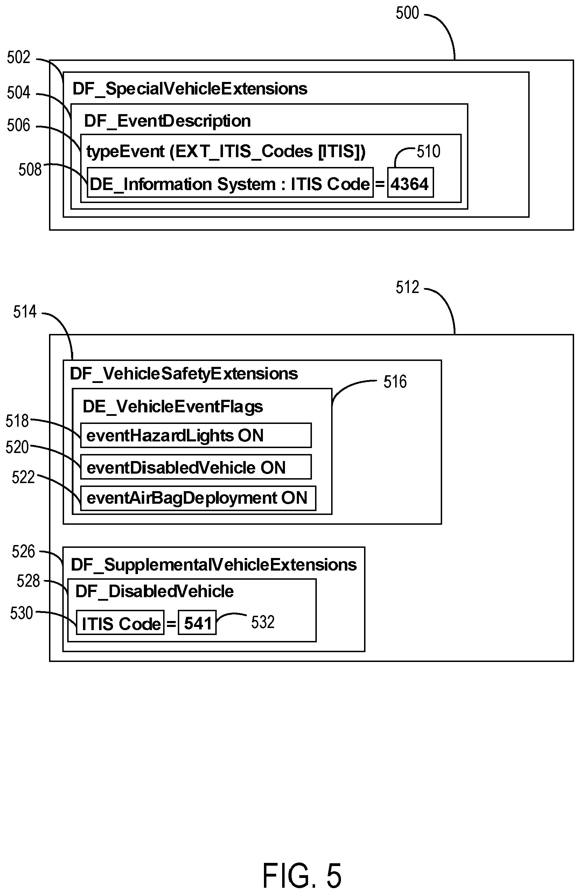

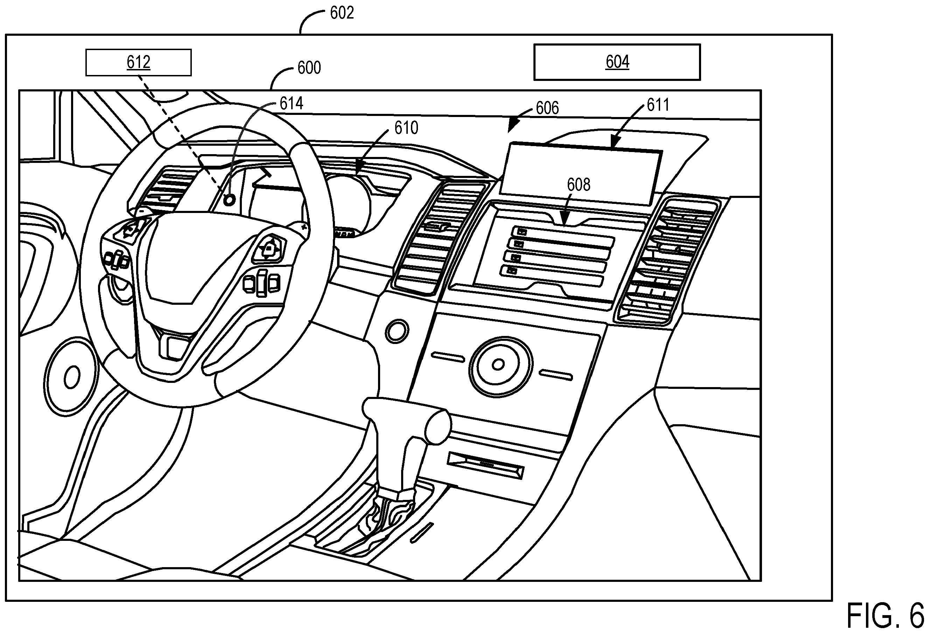

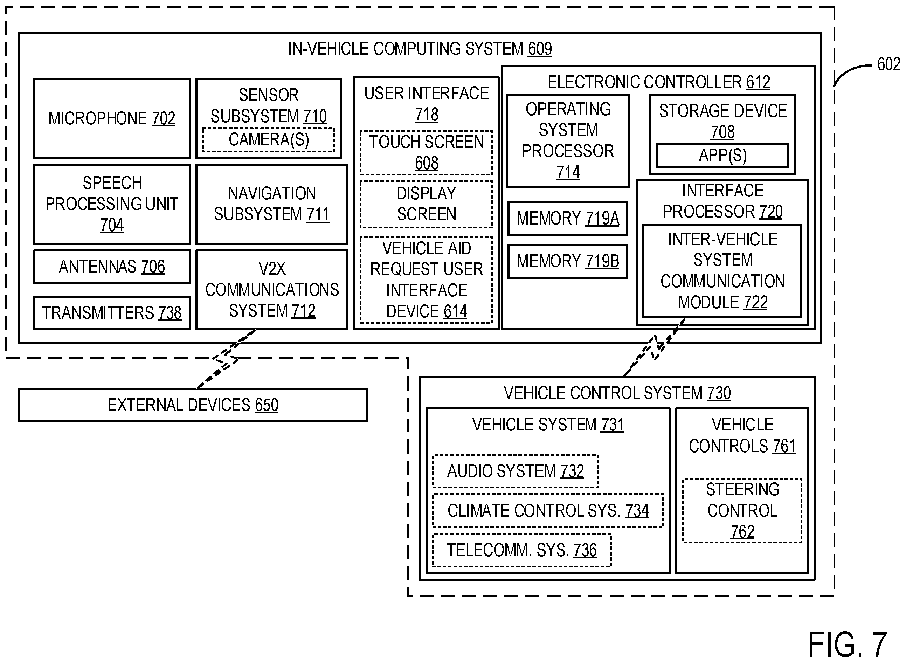

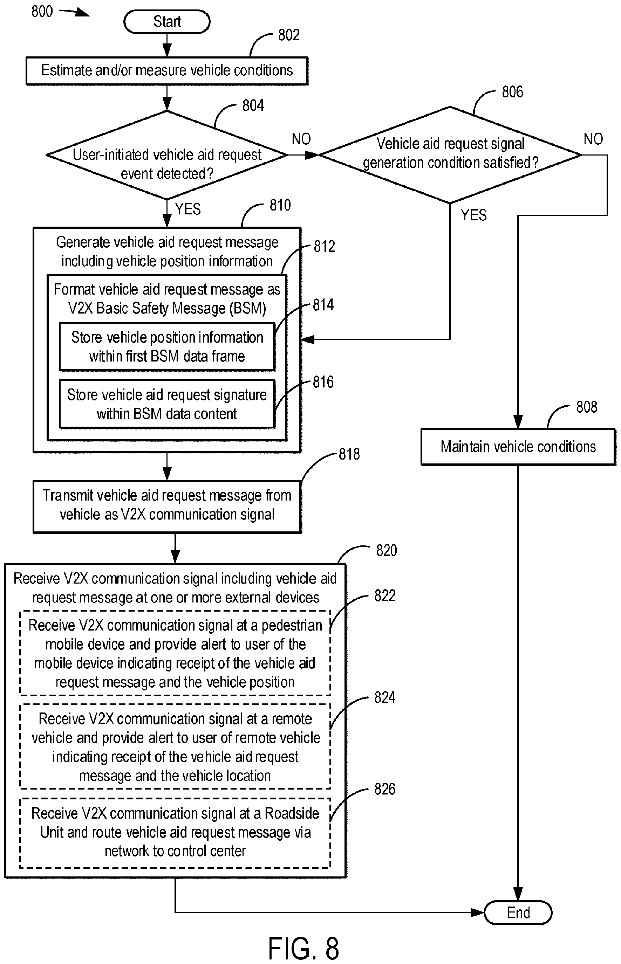

The following description relates to systems and methods for vehicle communications, and in particular, to vehicle aid request messages. According to one or more embodiments of the present disclosure, a vehicle, such as the vehicle shown by FIG. 1, includes a Vehicle-to-Everything (V2X) communications module, such as the V2X communications module shown by FIG. 7, configured to generate messages to be transmitted wirelessly to other devices external to the vehicle. An electronic controller of the vehicle may be electronically coupled to a vehicle aid request user interface device, such as the vehicle aid request user interface device shown by FIG. 6. The electronic controller may continuously monitor the vehicle aid request user interface device for a vehicle aid request command. The electronic controller may additionally continuously monitor the condition of a plurality of vehicle parameters to determine whether a vehicle aid request triggering event has occurred. According to the method shown by the flowchart of FIG. 8, during conditions in which an occupant of the vehicle inputs a vehicle aid request command to the vehicle aid request user interface device, or during conditions in which a different vehicle aid request triggering event has been detected, the electronic controller commands the V2X communications module to generate and transmit a Basic Safety Message (BSM) in accordance with SAE Surface Vehicle Standard J2735, such as the BSM shown schematically by FIG. 4. The BSM includes a vehicle aid request signature, such as one of the vehicle aid request signatures shown schematically by FIG. 5, and may additionally include vehicle location information such as vehicle latitude, vehicle longitude, and so on.

In one example scenario, as shown by FIG. 1, the BSM including the vehicle aid request signature may be received directly by a receiving device, such as a communications module, of a vehicle external to the vehicle that generates and transmits the BSM. In one example, the external vehicle may be a first responder vehicle, such as an ambulance. The vehicle that generates and transmits the BSM may be referred to herein as a requesting vehicle, and the external vehicle that receives the BSM may be referred to herein as a receiving vehicle. The receiving vehicle may process the BSM and retrieve the vehicle aid request signature and the location information of the requesting vehicle from the BSM. An electronic controller of the receiving vehicle may alert an occupant of the receiving vehicle of the vehicle aid request signature stored within the BSM. The occupant of the receiving vehicle may additionally be alerted of the location of the requesting vehicle based on the location information. As a result, aid provided to the requesting vehicle by the occupant of the receiving vehicle may be expedited.

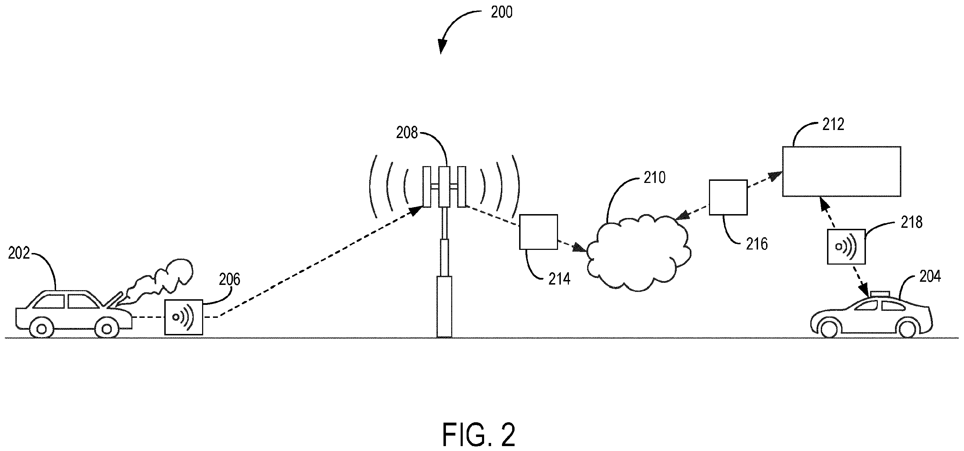

In another example scenario, as shown by FIG. 2, the BSM including the vehicle aid request signature may be received by infrastructure, such as a roadside unit (RSU). The RSU or other infrastructure may process the BSM and retrieve the vehicle aid request signature and the location information of the requesting vehicle from the BSM, and the vehicle aid request signature and requesting vehicle location information may be routed to a receiving vehicle and/or response control center over a network, such as a cellular network.

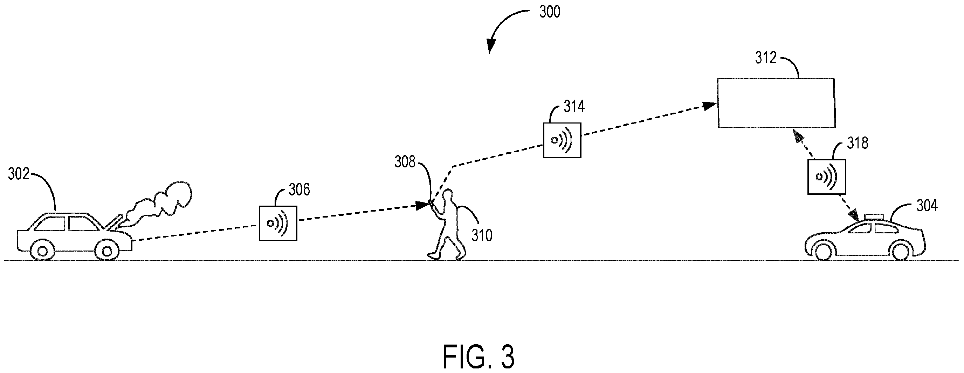

In another example scenario, as shown by FIG. 3, the BSM including the vehicle aid request signature may be received by a mobile device, such as a cellular phone, carried by a pedestrian. The mobile device may route the vehicle aid request signature and requesting vehicle location information to a receiving vehicle and/or response control center over a network.

By configuring the requesting vehicle to generate and transmit the BSM including the vehicle aid request signature, aid may be provided to the requesting vehicle at an increased speed. In particular, a duration between the generation and/or transmission of the BSM by the requesting vehicle and the receiving and/or processing of the BSM by the receiving vehicle may be reduced relative to conditions in which aid is requested directly by an occupant of the vehicle or a pedestrian via a cellular phone call to a response control center.

Referring to FIG. 1, a diagram 100 illustrating a first vehicle BSM communication scenario is shown. In the example shown, a vehicle 102 and/or one or more occupants of the vehicle 102 experiences conditions in which aid from an outside source (e.g., a first responder) is desired. For example, the conditions may include degradation of the vehicle 102 resulting in undesired immobilization of the vehicle 102, a medical urgency of one or more occupants of the vehicle 102, and so on. The vehicle 102 may be an automobile powered by an internal combustion engine and/or battery. However, in some examples, the vehicle 102 may be a different type of vehicle (e.g., a motorcycle). In each example, the vehicle 102 is configured to communicate wirelessly with other devices external to the vehicle 102 via a V2X communications system, similar to the examples described further below.

In some embodiments, in order to request aid, an occupant of the vehicle 102 (e.g., a driver and/or passenger of the vehicle 102) may interact with a vehicle aid request user interface device electronically coupled to an electronic controller of the vehicle 102. As one example, the vehicle aid request user interface device may be a button or switch arranged within a cabin of the vehicle 102, and the occupant of the vehicle 102 may engage the button or switch in order to indicate to the electronic controller that aid from an external source is desired. In some examples, the vehicle aid request user interface device may be a different type of user interface device, such as a touchscreen. The occupant may input a command to the touchscreen (e.g., select one or more elements of a graphical user interface displayed by the touchscreen) in order to indicate to the electronic controller that aid from an external source is desired.

In some embodiments, the electronic controller of the vehicle 102 may be configured to automatically request aid from an external source responsive to concurrent detection of a plurality of vehicle conditions. For example, the electronic controller may continuously monitor a condition of one or more air bags of the vehicle 102, one or more hazard lights of the vehicle 102, and/or a condition of an engine or other motive source of the vehicle 102 to determine whether a triggering event has occurred, and the electronic controller may determine whether to request aid based on the vehicle conditions. Deployment of one or more air bags may be referred to herein as an air bag deployment event, an ON condition of a hazard light may be referred to herein as a hazard lights event, and an immobilization of the vehicle may be referred to herein as a disabled vehicle event.

The vehicle 102, which may be referred to herein as the requesting vehicle, transmits a V2X wireless signal via the V2X communications system responsive to the user input to the vehicle aid request user interface and/or responsive to the detection of the vehicle conditions. The V2X wireless signal may be a radio signal, in some examples, transmitted via a transceiver of the V2X communications system of the vehicle 102. The V2X communications system may further include one or more processors and a non-transitory memory including instructions stored thereon. When executed, the instructions may cause the one or more processors to monitor a condition of the vehicle 102 for a triggering event and transmit the V2X wireless signal as described below.

The contents of the V2X wireless signal may be generated having the format of a BSM in accordance with SAE Surface Vehicle Standard J2735. The BSM may include a vehicle aid request signature, and may include vehicle location information such as a latitude, a longitude, and/or an elevation of the requesting vehicle 102. The vehicle aid request signature may include information indicating that aid is desired, as described further below with reference to FIG. 5.

The vehicle 102 may accordingly generate and transmit a BSM 106, as a V2X communication, to be received and/or processed by an external device (e.g., a device external to the vehicle 102), and in the scenario shown by the diagram 100 of FIG. 1, the external device is part of a second vehicle 104. The external device may be referred to herein as a receiving device, and the second vehicle 104, which may comprise the receiving device, may be referred to herein as the receiving vehicle. The receiving device may include a receiver (e.g., a transceiver), one or more processors electronically coupled to the receiver, and non-transitory memory including instructions stored thereon that when executed, cause the one or more processors to process the BSM 106 as described herein.

The receiving vehicle 104 receives the BSM 106 (e.g., via an antenna or other device) and processes the BSM 106 to retrieve the information stored within the BSM 106. In particular, the receiving vehicle 104 processes the BSM 106 and retrieves the vehicle aid request signature stored within the BSM 106. The receiving vehicle 104 may additionally retrieve the location information from the BSM 106 and may determine the location of the requesting vehicle 102 via the location information. The BSM 106 may be processed by a V2X communications system of the receiving vehicle 104. For example, an electronic controller of the receiving vehicle 104 may receive the BSM 106 and may process the BSM 106 to retrieve the location information and vehicle aid request signature. The receiving vehicle 104 may be a first responder vehicle (e.g., an ambulance, patrol vehicle, and so on), in some examples.

In some examples, the receiving vehicle 104 may route the BSM 106 to external infrastructure, such as a response control center.

By generating and transmitting the BSM 106 including the vehicle aid request signature and the vehicle location information, a response time to receive aid at the vehicle 102 may be reduced. In embodiments including the vehicle aid request user interface, the occupant of the vehicle may advantageously request aid more quickly by interacting with the vehicle aid request user interface than by interacting with a mobile device such as a cellular phone. In embodiments in which the electronic controller automatically requests aid from an external source by generating and transmitting the BSM 106 responsive to concurrent detection of a plurality of vehicle conditions, the aid may be requested without input by the occupants of the vehicle. As a result, during conditions in which the occupants of the vehicle are unable to request aid, the electronic controller requests aid by generating and transmitting the BSM 106 without user interaction, which may advantageously increase a likelihood of the occupants and vehicle receiving aid with decreased delay.

Referring to FIG. 2, a diagram 200 illustrating a second vehicle BSM communication scenario is shown. In the example shown, a vehicle 202 (which may be referred to herein as the requesting vehicle) may be similar to, or the same as, the vehicle 102 described above with reference to FIG. 1, and the vehicle 204 (which may be referred to herein as the receiving vehicle) may be similar to, or the same as, the vehicle 104 described above with reference to FIG. 1. The vehicle 202 experiences conditions in which aid from an outside source (e.g., a first responder) is desired. In some embodiments, occupants of the vehicle 202 may request aid via a vehicle aid request user interface, similar to the examples described above, and in some embodiments an electronic controller of the vehicle 202 may automatically request aid responsive to detection of a plurality of vehicle conditions, similar to the examples described above. In each embodiment, the vehicle 202 may generate and transmit a BSM 206, as a V2X communication, in accordance with SAE Surface Vehicle Standard J2735 including a vehicle aid request signature and vehicle location information.

In the scenario shown by FIG. 2, the BSM 206 is received by an RSU 208. The RSU 208 may be infrastructure including a transceiver (e.g., a combination transmitter and receiver) arranged along and/or proximate to a roadway. The RSU 208 may be configured to receive V2X wireless signals transmitted by vehicles and/or signals transmitted by mobile devices (e.g., cellular phones) via the transceiver. The RSU 208 may be in electronic communication with a network, such as a network 210, and the RSU 208 may transmit signals via the transceiver across the network to devices external to the RSU 208. The network 210 may be a wireless communication network such as a cellular network, in some examples, and information included within the BSM 206 may be transmitted over the internet via the network 210 to a response control center infrastructure 212 (which may be referred to herein as an emergency communications control center infrastructure).

The RSU 208 may receive the BSM 206 and/or may process the BSM 206 (e.g., via one or more processors, instructions stored in non-transitory memory, and so on) to retrieve a vehicle aid request signature and vehicle location information (e.g., the latitude, longitude, and/or elevation of the vehicle 202). In some examples, the RSU 208 may receive the BSM 206 up to 1 kilometer away from the vehicle 202. The RSU 208 forwards (e.g., routes) the information retrieved from the BSM 206 (and/or BSM 206 itself) over the network 210, as indicated schematically by a data package 214 provided to the network 210 by the RSU 208 and a data package 216 transmitted over the network 210 to response control center infrastructure 212. In some examples, the contents (e.g., data) of the data package 214 and the data package 216 may be the same. The response control center infrastructure 212 receives and/or processes the data package 216 and communicates wirelessly with the receiving vehicle 204, as indicated by V2X communication 218, to provide the location information of the vehicle 202 and the vehicle aid request (and/or BSM 206 itself) to an occupant of the receiving vehicle 204 (e.g., a first responder). The occupant of the receiving vehicle 204 may then locate the requesting vehicle 202 using the location information to provide aid to the occupants of the requesting vehicle 202. As a result, a response time to provide aid to the requesting vehicle 202 may be reduced.

Although in the example described above the BSM 206 is received by the RSU 208, in some examples the BSM 206 may be received by multiple RSUs and/or other devices. One or more of the RSUs and/or other devices may process the BSM 206 as described above and may route the vehicle location information and vehicle aid request to the response control center infrastructure 212 as described above.

Referring to FIG. 3, a diagram 300 illustrating a third vehicle BSM communication scenario is shown. In the example shown, a vehicle 302 (which may be referred to herein as the requesting vehicle) may be similar to, or the same as, the vehicle 102 described above with reference to FIG. 1 and/or the vehicle 202 described above with reference to FIG. 2. A vehicle 304 (which may be referred to herein as the receiving vehicle) may be similar to, or the same as, the vehicle 104 described above with reference to FIG. 1 and/or the vehicle 204 described above with reference to FIG. 2. The vehicle 302 experiences conditions in which aid from an outside source (e.g., a first responder) is desired. In some embodiments, occupants of the vehicle 302 may request aid via a vehicle aid request user interface, similar to the examples described above, and in some embodiments an electronic controller of the vehicle 302 may automatically request aid responsive to detection of a plurality of vehicle conditions, similar to the examples described above. In each embodiment, the vehicle 302 may generate and transmit a BSM 306, as a V2X communication, in accordance with SAE Surface Vehicle Standard J2735 including a vehicle aid request signature and vehicle location information.

In the scenario shown by FIG. 3, the BSM 306 is received by a mobile device 308 carried by an observer 310. The observer 310 may be a pedestrian proximate to the vehicle 302, in some examples (e.g., within a range of 1 kilometer of the vehicle 302). The mobile device 308 may include a transceiver configured to receive V2X wireless signals transmitted by vehicles. The mobile device 308 may be in electronic communication with a network, such as a cellular network, and the mobile device 308 may transmit signals via its transceiver across the network to devices external to the mobile device 308. The mobile device 308 may transmit information included within the BSM 306 over the network to a response control center infrastructure 312 (which may be referred to herein as an emergency communications control center infrastructure), and the response control center infrastructure 312 may communicate wirelessly with the receiving vehicle 304 in order to provide the location information and vehicle aid request of the requesting vehicle 302 to the receiving vehicle 304.

The mobile device 308 may receive the BSM 306 and/or may process the BSM 306 (e.g., via one or more processors, instructions stored in non-transitory memory, and so on) to retrieve the vehicle aid request signature and the vehicle location information (e.g., the latitude, longitude, and/or elevation of requesting vehicle 302). The mobile device 308 forwards (e.g., routes) the information retrieved from the BSM 306 (and/or BSM 306 itself) over the network, as indicated schematically by data package 314 transmitted over the network to response control center infrastructure 312. The response control center infrastructure 312 receives and/or processes the data package 314 and communicates wirelessly with the receiving vehicle 304, as indicated by V2X communication 318, to provide the location information of the requesting vehicle 302 and the vehicle aid request (and/or BSM 306 itself) to an occupant of the receiving vehicle 304 (e.g., a first responder), as described above. The occupant of the receiving vehicle 304 may then locate the requesting vehicle 302 using the location information to provide aid to the occupants of the requesting vehicle 302. As a result, a response time to provide aid to the requesting vehicle 302 may be reduced.

Although in the example described above the BSM 306 is received by the mobile device 308, in some examples the BSM 306 may be received by multiple mobile devices and/or other devices (e.g., the BSM 306 may be received by multiple mobile devices held by multiple observers). One or more of the mobile devices and/or other devices may process the BSM 306 as described above and may route the vehicle location information and vehicle aid request to the response control center infrastructure 312 as described above.

Referring to FIG. 4, a block diagram 400 schematically illustrating a V2X communication 402 including a BSM 406 storing a vehicle aid request signature 412 is shown. The V2X communication 402 is formatted (e.g., structured) in accordance with SAE Surface Vehicle Standard J2735, and may be generated and transmitted utilizing a Dedicated Short Range Communications (DSRC) medium, in some examples. The V2X communication 402 may be generated and transmitted by a vehicle experiencing conditions in which aid from an external source is desired. For example, the V2X communication 402 may be generated and transmitted by one or more of the vehicle 102 shown by FIG. 1 and described above, vehicle 202 shown by FIG. 2 and described above, or vehicle 302 shown by FIG. 3 and described above.

The V2X communication 402 carries a V2X message 404 (e.g., structure) that may include a plurality of different data frames and data elements configured to provide an indication of vehicle conditions. The vehicle conditions as described herein refer to conditions of the vehicle generating and transmitting the V2X communication 402. The V2X message 404 is formatted in accordance with section 5.1 of SAE Surface Vehicle Standard J2735.

In one example, theV2X message 404 may be formatted as shown:

```
      MessageFrame ::= SEQUENCE {
      messageId MESSAGE-ID-AND-TYPE.&id({MessageTypes}),
      value MESSAGE-ID-AND-TYPE.&Type({MessageTypes}{@.messageId}),
      ...
      }
       
      MESSAGE-ID-AND-TYPE ::= CLASS {
      &id DSRCmsgID UNIQUE,
      &Type
      } WITH SYNTAX {&Type IDENTIFIED BY &id}
```

The V2X message 404 includes a BSM 406 stored therein. The BSM 406 may be similar to, or the same as, the BSM 106 described above with reference to FIG. 1, the BSM 206 described above with reference to FIG. 2, and/or the BSM 306 described above with reference to FIG. 3. The BSM 406 includes vehicle location information 408 and vehicle aid request signature 412, and may further include an extension information 410. The BSM 406 may be formatted in accordance with section 5.2 of SAE Surface Vehicle Standard J2735.

The vehicle location information 408 includes a latitude, longitude, and/or elevation of the vehicle generating and transmitting the BSM 406. The vehicle location information 408 may be stored within a BSMcoreData data frame of the BSM 406, in some examples, as defined by section 5.2 of SAE Surface Vehicle Standard J2735. For example, the vehicle latitude may be stored in a latitude data element (e.g., "lat") of the BSMcoreData data frame, the vehicle longitude may be stored in a longitude data element (e.g., "long") of the BSMcoreData data frame, and the vehicle elevation may be stored in an elevation data element (e.g., "elev") of the BSMcoreData data frame.

The extension information 410 may be a BSMpartIIExtension content (e.g., data frame) of the BSM 406, in accordance with section 5.2 of SAE Surface Vehicle Standard J2735. The vehicle aid request signature 412 is stored within the extension information 410 and includes a plurality of data elements configured to indicate that the vehicle generating the V2X message 404 requests aid from an external source (e.g., a first responder). In some embodiments, a content of the vehicle aid request signature 412 may result from generation of the V2X message 404 responsive to a user input to a vehicle aid request user interface device (e.g., similar to the examples described above). In some embodiments, a content of the vehicle aid request signature 412 may result from generation of the V2X message 404 automatically responsive to detection of a plurality of vehicle conditions, similar to the examples described above.

In one example, the BSM 406 may be formatted as shown:

```
      BasicSafetyMessage ::= SEQUENCE {
      coreData BSMcoreData,
      partII SEQUENCE (SIZE(1..8)) OF PartIIcontent {{ BSMpartIIExtension }}
 OPTIONAL,
      regional SEQUENCE (SIZE(1..4)) OF RegionalExtension {{REGION.Reg-
      BasicSafetyMessage}} OPTIONAL,
      ...
      }
       
      PARTII-EXT-ID-AND-TYPE ::= CLASS {
      &id PartII-Id UNIQUE,
      &Type
      } WITH SYNTAX {&Type IDENTIFIED BY &id}
      PartIIcontent { PARTII-EXT-ID-AND-TYPE: Set} ::= SEQUENCE {
      partII-Id PARTII-EXT-ID-AND-TYPE.&id( {Set} ),
      partII-Value PARTII-EXT-ID-AND-TYPE.&Type( {Set}{@partII-Id} )
      }
      PartII-Id ::= INTEGER (0..63)
      vehicleSafetyExt PartII-Id::= 0 -- VehicleSafetyExtensions
      specialVehicleExt PartII-Id::= 1 -- SpecialVehicleExtensions
      supplementalVehicleExt PartII-Id::= 2 - SupplementalVehicleExtensions
       
      BSMpartIIExtension PARTII-EXT-ID-AND-TYPE ::= {
      { VehicleSafetyExtensions IDENTIFIED BY vehicleSafetyExt} |
      { SpecialVehicleExtensions IDENTIFIED BY specialVehicleExt} |
      { SupplementalVehicleExtensions IDENTIFIED BY supplementalVehicleExt} ,
      ...
      }
```

}Example vehicle aid request signatures are described below with reference to FIG. 5.

Referring to FIG. 5, an example first vehicle aid request signature 500 and an example second vehicle aid request signature 512 are shown. The first vehicle aid request signature 500 may be generated responsive to user input to a vehicle aid request user interface device, and the second vehicle aid request signature 512 may be generated automatically responsive to detection of a plurality of vehicle conditions, similar to the examples described above with reference to FIGS. 1-3. In some embodiments, a BSM, such as the BSM 406 described above with reference to FIG. 4, may carry one or both of the first vehicle aid request signature 500 and the second vehicle aid request signature 512.

The first vehicle aid request signature 500 includes a DF_SpecialVehicleExtensions data frame 502, and a DF_EventDescription data frame 504 that is part of the DF_SpecialVehicleExtensions data frame 502 (e.g., included within the DF_SpecialVehicleExtensions data frame 502). The DF_EventDescription data frame 504 includes a typeEvent (EXT_ITIS_Codes [ITIS]) data content 506, and the typeEvent (EXT_ITIS_Codes [ITIS]) data content 506 includes a DE_Information System data content 508. The DE_Information System data content 508 includes an ITIS code 510 having a value of 4364, where the ITIS code is in accordance with SAE Surface Vehicle Standard J2540-2, and in particular, in accordance with section 9.582 of SAE Surface Vehicle Standard J2540-2. The ITIS code 510 with the value of 4364 is indicative of an "in emergency dial 911" condition. By configuring the first vehicle aid request signature 500 to include the ITIS code 510 with the value of 4364, a device receiving the BSM may process the BSM to retrieve the first vehicle aid request signature 500 and may determine that the vehicle that generated and transmitted the BSM requests aid based on the ITIS code 510 with the value of 4364.

The second vehicle aid request signature 512 includes a DF_VehicleSafetyExtensions data frame 514. The DF_VehicleSafety Extensions data frame 514 includes a DE_VehicleEventFlags data element 516 with an eventHazardLights flag 518, an eventDisabledVehicle flag 520, and an eventAirBagDeployment flag 522. In the example shown by FIG. 5, each of the eventHazardLights flag 518, the eventDisabledVehicle flag 520, and the eventAirBagDeployment flag 522 may be set (e.g., may have an "ON" value).

The DF_VehicleSafetyExtensions data frame 514 of the second vehicle aid request signature 512 additionally includes a DF_SupplementalVehicleExtensions data frame 526, and the DF_SupplementalVehicleExtensions data frame 526 includes a DF_DisabledVehicle data frame 528 having an ITIS code data element 530. The ITIS code data element 530 includes an ITIS code 532 having a value between 532 and 541, in accordance with SAE Surface Vehicle Standard J2540-2 (e.g., section 6.17 of SAE Surface Vehicle Standard J2540-2).

By configuring the second vehicle aid request signature 512 to include the eventHazardLights flag 518, the eventDisabledVehicle flag 520, and the eventAirBagDeployment flag 522 being set (e.g., having an "ON" value), and by configuring the ITIS code 532 to have a value between 532 and 541, a device receiving the BSM may process the BSM to retrieve the second vehicle aid request signature 512 and may determine that the vehicle that generated and transmitted the BSM requests aid.

FIG. 6 shows an example partial view of an interior of a cabin 600 of a vehicle 602, in which a driver and/or one or more passengers may be seated. In some examples, the vehicle 602 may be similar to, or the same as, the vehicle 102 shown by FIG. 1 and described above, the vehicle 202 shown by FIG. 2 and described above, and/or the vehicle 302 shown by FIG. 3 and described above.

Vehicle 602 of FIG. 6 may be a motor vehicle including drive wheels (not shown) and a power source 604 configured to provide torque to the drive wheels, such as an internal combustion engine and/or battery. In examples in which the power source 604 includes an internal combustion engine, the internal combustion engine may include one or more combustion chambers which may receive intake air via an intake passage and exhaust combustion gases via an exhaust passage. Vehicle 602 may be a road automobile, among other types of vehicles. In some examples, vehicle 602 may include a hybrid propulsion system including an energy conversion device operable to absorb energy from vehicle motion and/or the engine and convert the absorbed energy to an energy form suitable for storage by an energy storage device. Vehicle 602 may be a fully electric vehicle in some examples, incorporating fuel cells, solar energy capturing elements, and/or other energy storage systems for powering the vehicle.

As shown, the vehicle 602 may include an instrument panel 606 with various displays and controls accessible to a human driver (also referred to as the user and/or occupant) of vehicle 602. For example, instrument panel 606 may include a touch screen 608 of an in-vehicle computing system and an instrument cluster 610. Touch screen 608 may receive user input to in-vehicle computing system for controlling visual display output, user preferences, control parameter selection, and so on. While the example system shown in FIG. 6 includes controls that may be performed via a user interface of the in-vehicle computing system, such as touch screen 608 without a separate control panel, in other embodiments, the vehicle may include additional control panels. In some embodiments, one or more hardware elements of in-vehicle computing system 609, such as touch screen 608, a display screen 611, various control dials, knobs and buttons, memory, processor(s), and any interface elements (e.g., connectors or ports) may form an integrated head unit that is installed in instrument panel 606 of the vehicle. The head unit may be fixedly or removably attached in instrument panel 606. In additional or alternative embodiments, one or more hardware elements of in-vehicle computing system 609 may be modular and may be installed in multiple locations of the vehicle.

Cabin 600 may include one or more sensors for monitoring the vehicle, the user, and/or the environment. For example, cabin 600 may include one or more sensors configured to sense a condition of a hazard lights interface (e.g., sense whether a button interface providing user control of hazard lights of the vehicle is engaged or disengaged), sense deployment of one or more airbags of the vehicle, and so on. It is to be understood that the above-described sensors and/or one or more additional or alternative sensors may be positioned in any suitable location of the vehicle. For example, sensors may be positioned in an engine compartment, on an external surface of the vehicle, and/or in other suitable locations for providing information regarding the operation of the vehicle, ambient conditions of the vehicle, a user of the vehicle, and so on. Information regarding ambient conditions of the vehicle, vehicle status, or vehicle driver may also be received from sensors external to/separate from the vehicle (that is, not part of the vehicle system), such as sensors coupled to external devices 650.

The vehicle 602 may include a vehicle aid request user interface 614, similar to the examples described above, configured to provide the occupants of the vehicle with an interface to request aid from an external source (e.g., a first responder vehicle). For example, during conditions in which the vehicle aid request user interface 614 is not engaged (e.g., the occupants do not interact with the vehicle aid request user interface to request aid), the conditions of the vehicle may be maintained without generating and/or transmitting a vehicle aid request. However, during conditions in which the vehicle aid request user interface 614 is engaged, an electronic controller 612 of the vehicle 602 electronically coupled to the vehicle aid request user interface 614 and configured to receive electronic signals from the vehicle aid request user interface 614 may generate and transmit a vehicle aid request according to the examples described herein. In particular, the electronic controller 612 may generate and transmit a BSM, as a V2X communication, in accordance with SAE Surface Vehicle Standard J2735, as described above (e.g., similar to, or the same as, the BSM 406 described above with reference to FIG. 4) including a vehicle aid request signature (e.g., similar to, or the same as, the first vehicle aid request signature 500 described above with reference to FIG. 5). The electronic controller 612 may be integrated with the in-vehicle computing system 609 and may be configured to receive electronic signals from the various sensors of the vehicle 602, in some examples.

In the example shown by FIG. 6, the vehicle aid request user interface 614 is a button arranged within the instrument cluster 610 (e.g., positioned at a side of the instrument cluster 610). However, in other examples, the vehicle aid request user interface 614 may be a different type of user interface device. As one example, the vehicle aid request user interface 614 may be a switch. In another example, the vehicle aid request user interface 614 may be integrated with the touch screen 608 (e.g., included as a graphical user interface element displayed by the touch screen 608).

Referring to FIG. 7, a block diagram of in-vehicle computing system 609 integrated inside vehicle 602 is shown. In-vehicle computing system 609 may be referred to herein as a controller and/or electronic controller in some examples. In-vehicle computing system 609 may perform one or more of the methods described herein in some embodiments. In-vehicle computing system 609 may include, or be coupled to, various vehicle systems, sub-systems, hardware components, as well as software applications and systems that are integrated in, or integratable into, vehicle 602.

In-vehicle computing system 609 may include one or more processors including an operating system processor 714 and an interface processor 720. Operating system processor 714 may execute an operating system on in-vehicle computing system 609, and control input/output, display, and other operations of in-vehicle computing system 609. Interface processor 720 may interface with a vehicle control system 730 via an inter-vehicle system communication module 722.

Inter-vehicle system communication module 722 may output data to one or more other vehicle systems 731 and/or one or more other vehicle control elements 761, while also receiving data input from other vehicle systems 731 and other vehicle control elements 761, e.g., by way of vehicle control system 730. When outputting data, inter-vehicle system communication module 722 may provide a signal via a bus corresponding to any status of the vehicle, the vehicle surroundings, or the output of any other information source connected to the vehicle. Vehicle data outputs may include, for example, analog signals (such as current velocity), digital signals provided by individual information sources (such as clocks, thermometers, location sensors such as Global Positioning System (GPS) sensors, and so on), digital signals propagated through vehicle data networks (such as an engine controller area network (CAN) bus through which engine related information may be communicated, a climate control CAN bus through which climate control related information may be communicated, and a multimedia data network through which multimedia data is communicated between multimedia components in the vehicle), and so on. For example, in-vehicle computing system 609 may retrieve from the engine CAN bus the current speed of the vehicle estimated by the wheel sensors, a power state of the vehicle via a battery and/or power distribution system of the vehicle, an ignition state of the vehicle, a condition of one or more air bags of the vehicle, a condition of hazard lights of the vehicle, a condition of the power source 604 (shown by FIG. 6) of the vehicle, and so on. In addition, other interfacing means such as Ethernet may be used as well without departing from the scope of this disclosure.

A storage device 708 may be included in in-vehicle computing system 609 to store data such as instructions executable by operating system processor 714 and/or interface processor 720 in non-volatile form. Storage device 708 may store application data to enable in-vehicle computing system 609 to run an application for connecting to a cloud-based server and/or collecting information for transmission to the cloud-based server. The application may retrieve information gathered by vehicle systems/sensors, input devices (e.g., a user interface 718), data stored in one or more storage devices, such as a volatile memory 719A or a non-volatile memory 719B, devices in communication with the in-vehicle computing system, and so on. In-vehicle computing system 609 may further include a volatile memory 719A. Volatile memory 719A may be random access memory (RAM). Non-transitory storage devices, such as non-volatile storage device 708 and/or non-volatile memory 719B (e.g., non-transitory memory), may store instructions and/or code that, when executed by a processor (e.g., operating system processor 714 and/or interface processor 720), controls in-vehicle computing system 609 to perform one or more of the actions described in the disclosure.

A microphone 702 may be included in In-vehicle computing system 609 to receive voice commands from a user, to measure ambient noise in the vehicle, and so on. A speech processing unit 704 may process voice commands, such as the voice commands received from microphone 702. In some embodiments, in-vehicle computing system 609 may also be able to receive voice commands and sample ambient vehicle noise using a microphone included in an audio system 732 of the vehicle.

One or more additional sensors may be included in a sensor subsystem 710 of in-vehicle computing system 609. For example, sensor subsystem 710 may include a camera, such as a rear view camera for assisting a user in parking the vehicle and/or a cabin camera for identifying a user (e.g., using facial recognition and/or user gestures). Sensor subsystem 710 of in-vehicle computing system 609 may communicate with and receive inputs from various vehicle sensors and may further receive user inputs. For example, the inputs received by sensor subsystem 710 may include transmission gear position, transmission clutch position, gas pedal input, brake input, transmission selector position, vehicle speed, engine speed, mass airflow through the engine, ambient temperature, intake air temperature, engagement of the vehicle aid request user interface 614, and so on, as well as inputs from climate control system sensors (such as heat transfer fluid temperature, antifreeze temperature, fan speed, passenger compartment temperature, desired passenger compartment temperature, ambient humidity, and so on), an audio sensor detecting voice commands issued by a user, a fob sensor receiving commands from and optionally tracking the geographic location/proximity of a fob of the vehicle, and so on.

While certain vehicle system sensors may communicate with sensor subsystem 710 alone, other sensors may communicate with both sensor subsystem 710 and vehicle control system 730, or may communicate with sensor subsystem 710 indirectly via vehicle control system 730. A navigation subsystem 711 of in-vehicle computing system 609 may generate, transmit, receive, and/or process navigation information such as location information (e.g., via a GPS sensor and/or other sensors from sensor subsystem 710), route guidance, traffic information, point-of-interest (POI) identification, and/or provide other navigational services for the driver.

A V2X communications system 712 of in-vehicle computing system 609 may be coupleable to and/or communicate with one or more external devices 650 located external to vehicle 602. The V2X communications system is in electronic communication with the electronic controller 612 of the vehicle 602 and may be commanded by the electronic controller 612 to generate and transmit V2X communications, similar to the examples described above. As one example, the electronic controller 612 may command the V2X communications system 712 to generate and transmit a BSM including a vehicle aid request signature, according to the examples described above with reference to FIGS. 1-5. The external devices 650 may include The external devices may include extravehicular devices that are separate from and located externally to the vehicle 602, such as mobile devices (e.g., cellular phones) carried by observers of the vehicle 602 (e.g., pedestrians), RSUs arranged along roadways, receivers of vehicles external to the vehicle 602 (e.g., first responder vehicles), and so on. The V2X communications system 712 may communicate wirelessly with the external devices 650 via a wireless communications medium such as DSRC, in one example.

Vehicle control system 730 may include controls for controlling aspects of various vehicle systems 731 involved in different in-vehicle functions. These may include, for example, controlling aspects of vehicle audio system 732, aspects of a climate control system 734, aspects of a telecommunication system 736, and so on.

Vehicle control system 730 may also include controls for adjusting the settings of various vehicle control elements 761 (or vehicle controls, or vehicle system control elements) related to the engine and/or auxiliary elements within the cabin of the vehicle, such as one or more steering wheel controls 762 (e.g., steering wheel-mounted audio system controls, cruise controls, windshield wiper controls, headlight controls, turn signal controls, and so on), instrument panel controls, microphone(s), accelerator/brake/clutch pedals, a gear shift, door/window controls positioned in a driver or passenger door, seat controls, cabin light controls, audio system controls, cabin temperature controls, and so on. Vehicle control elements 761 may also include internal engine and vehicle operation controls (e.g., engine controller module, actuators, valves, and so on) that are configured to receive instructions via the CAN bus of the vehicle to change operation of one or more of the engine, exhaust system, transmission, and/or other vehicle system.

In-vehicle computing system 609 may further include one or more antennas 706. The in-vehicle computing system may obtain broadband wireless internet access via antennas 706, and may further receive broadcast signals such as radio, television, weather, traffic, and the like. In some examples, one or more antennas may be included with the V2X communications system 712 and may be configured to receive V2X communications from vehicles external to the vehicle 602, from RSUs, and so on. In-vehicle computing system 609 may receive positioning signals such as GPS signals via antennas 706. The in-vehicle computing system may also receive wireless commands via radio frequency (RF) such as via antennas 706 or via infrared or other means through appropriate receiving devices. In some embodiments, antenna 706 may be included as part of audio system 732 or telecommunication system 736. Additionally, antenna 706 may provide AM/FM radio signals to external devices 650 in some examples.

The vehicle 602 further includes one or more transmitters 738. In some examples, one or more of the transmitters 738 may be integrated together with one or more of the antennas 706 to form one or more transceivers configured to generate and transmit V2X communications, and receive and process V2X communications, through V2X communications system 712.

One or more elements of in-vehicle computing system 609 may be controlled by a user via user interface 718. User interface 718 may include a graphical user interface presented on a touch screen, such as touch screen 608 and/or display screen 611 of FIG. 6, and/or user-actuated buttons, switches, knobs, dials, sliders, and so on. For example, user-actuated elements may include steering wheel controls, door and/or window controls, instrument panel controls, audio system settings, climate control system settings, and the like. A user may also interact with one or more applications of in-vehicle computing system 609 via user interface 718. In addition to receiving a user's vehicle setting preferences on user interface 718, vehicle settings selected by in-vehicle control system 730 may be displayed to a user on user interface 718. Notifications and other messages (e.g., received messages), as well as navigational assistance, may be displayed to the user on a display of the user interface. User preferences/information and/or responses to presented messages may be performed via user input to the user interface.

Although the electronic controller 612 is shown including the operating system processor 714, memory 719A, memory 719B, and so on, in some embodiments the electronic controller 612 may include a different number and/or configuration of components. For example, the electronic controller 612 may additionally be integrated with the one or more antennas 706, the one or more transmitters 738, and so on.

Referring to FIG. 8, a flow chart illustrating a method 800 for controlling V2X communications of a vehicle is shown. The vehicle may be similar to, or the same as, the vehicle 102 described above with reference to FIG. 1, the vehicle 202 described above with reference to FIG. 2, the vehicle 302 described above with reference to FIG. 3, and/or the vehicle 602 described above with reference to FIGS. 6-7. The V2X communications, which are described further below, may be similar to, or the same as, the V2X communications described above with reference to FIGS. 4-5. Instructions for carrying out the method 800 and the rest of the methods included herein may be executed by a controller based on instructions stored on a memory of the controller and in conjunction with signals received from sensors of the vehicle, such as the sensors described above with reference to FIGS. 6-7. The controller may employ actuators of the vehicle to adjust vehicle operation, according to the methods described below.

At part 802, the method 800 includes estimating and/or measuring vehicle conditions. Estimating and/or measuring vehicle conditions may include determining a condition of one or more airbags of the vehicle (e.g., determining whether one or more of the air bags have been deployed or inflated), determining a condition of hazard lights of the vehicle (e.g., determining whether the hazard lights are activated or deactivated), determining a condition of a power source and/or a fuel level of the vehicle (e.g., determining whether an engine of the vehicle is in an ON condition or an OFF condition, whether a fuel reservoir of the vehicle includes sufficient fuel to provide to the engine to generate torque at the wheels of the vehicle, and/or whether a battery of the vehicle includes sufficient charge to generate torque at the wheels), and so on. The method continues from part 802 to part 804.

At part 804, the method includes determining whether a user-initiated vehicle aid request event is detected. Determining whether a user-initiated vehicle aid request event is detected may include determining whether a vehicle aid request user interface device of the vehicle is in an engaged condition or a disengaged condition. In some examples, the vehicle aid request user interface device may be similar to, or the same as, the vehicle aid request user interface device 614 described above with reference to FIGS. 6-7. In one example, the user-initiated vehicle aid request event may occur responsive to engagement of a button of the vehicle aid request user interface device by an occupant of the vehicle (e.g., driver or passenger). In another example, the vehicle aid request user interface device may be integrated with a touch screen of the vehicle, such as the touch screen 608 described above with reference to FIGS. 6-7, as a graphical user interface element displayed by the touch screen. The user-initiated vehicle aid request event may occur responsive to input provided to the touch screen by an occupant of the vehicle.

If a user-initiated vehicle aid request event is not detected at part 804, the method continues from part 804 to part 806. If a user-initiated vehicle aid request event is detected at part 804, the method continues from part 804 to part 810.

At part 806, the method includes determining whether a vehicle aid request generation condition is satisfied. Determining whether a vehicle aid request generation condition is satisfied may include determining a plurality of vehicle conditions and comparing the determined vehicle conditions to a pre-determined set of conditions. For example, the vehicle aid request generation condition may be satisfied during conditions in which one or more air bags of the vehicle are deployed, the hazard lights of the vehicle are activated (e.g., in an ON condition in which the hazard lights are energized and illuminated), and the vehicle is immobile (e.g., torque is not generated by the power source of the vehicle, such as the engine or battery, and torque is not provided to the wheels of the vehicle). Concurrent detection of each of the conditions described above with reference to the air bags, hazard lights, and vehicle immobilization may result in a determination that the vehicle aid request generation condition is satisfied. However, if one or more of the above-described conditions is not detected, the electronic controller of the vehicle (e.g., similar to, or the same as, the electronic controller 612 described above with reference to FIGS. 6-7) may determine that the vehicle aid request generation condition is not satisfied.

If a vehicle aid request generation condition is not satisfied at part 806, the method continues from part 806 to part 808. If a vehicle aid request generation condition is satisfied at part 806, the method continues from part 806 to part 810.

At part 808, the method includes maintaining vehicle conditions. Maintaining vehicle conditions may include not generating and/or transmitting a V2X communication indicating that aid is requested (e.g., not generating and/or transmitting a BSM including a vehicle aid request signature).

At part 810, the method includes generating a vehicle aid request message including vehicle position information, which may in turn include, at 812, formatting the vehicle aid request message as a V2X BSM. In particular, the vehicle aid request message may be a BSM, in the form of a V2X communication, in accordance with SAE Surface Vehicle Standard J2735. For example, the vehicle aid request message may be similar to, or the same as, the V2X communication 402 described above with reference to FIG. 4.

Formatting the vehicle aid request message as a V2X BSM at part 812 may include, at part 814, storing the vehicle position information within a first BSM data frame. The vehicle position information may include vehicle latitude, vehicle longitude, and/or vehicle elevation. In one example, the vehicle position information may be stored within a B SMcoreData data frame of the V2X communication, as described above with reference to FIG. 4.

Formatting the vehicle aid request message as a V2X BSM at part 812 may also include, at part 816, storing a vehicle aid request signature within a second BSM data frame. The vehicle aid request signature may be stored within a BSMpartIIExtension data content (e.g., data frame) of the V2X communication, as described above with reference to FIG. 4. During conditions in which a user-initiated vehicle aid request event is detected at 804, the vehicle aid request signature includes a DE_Information System data element having an ITIS code with a value of 4364, as described above with reference to the first vehicle aid request signature 500 shown schematically by FIG. 5. During conditions in which the vehicle aid request generation condition is satisfied at 806, the vehicle aid request signature includes a DE_VehicleEventFlags data element with an eventHazardLights flag, an eventDisabledVehicle flag, and an eventAirBagDeployment flag being set (e.g., having an "ON" value), as well as a DF _DisabledVehicle data frame including an ITIS code having a value between 532 and 541, in accordance with SAE Surface Vehicle Standard J2735 and SAE Surface Vehicle Standard J2540-2, as described above with reference to the second vehicle aid request signature 512 shown schematically by FIG. 5.

The method continues from part 810 to part 818.

At part 818, the method includes transmitting the vehicle aid request message from the vehicle as a V2X communication. Transmitting the vehicle aid request message from the vehicle as a V2X communication may include broadcasting the V2X communication wirelessly via a DSRC medium or other medium. The method continues from part 818 to part 820.

At part 820, the method includes receiving the V2X communication including the vehicle aid request message at one or more external devices. The one or more external devices may include pedestrian mobile devices, RSUs, and/or receiving vehicles external to the vehicle generating the V2X communication (e.g., the requesting vehicle), similar to the examples described above with reference to FIGS. 1-3. The one or more external devices may process the V2X communication to retrieve the vehicle aid request signature from the V2X communication. For example, the one or more external devices may each include a respective electronic controller with one or more processors, memory, and so forth, and the respective electronic controller of each of the one or more external devices may process the V2X communication to retrieve the vehicle aid request signature from the V2X communication.

In some embodiments, following retrieval of the vehicle aid request signature from the V2X communication by the one or more external devices, the one or more external devices may determine (e.g., via the respective electronic controller of each external device) a condition of the vehicle that generated the V2X communication based on a content of the vehicle aid request signature.

In one example, as described herein, the vehicle aid request message may be generated responsive to user input (e.g., at part 804), and/or the vehicle aid request message may be generated responsive to satisfaction of a vehicle aid request signal generation condition (e.g., at part 806). During conditions in which the vehicle aid request message is generated responsive to user input, the content (e.g., data) of the vehicle aid request signature may include an ITIS code having a value equal to 4364 (e.g., similar to the first vehicle aid request signature 500 shown by FIG. 5 and described herein). During conditions in which the vehicle aid request message is generated responsive to the satisfaction of the vehicle aid request signal generation condition (e.g., one or more air bags of the vehicle are deployed, the hazard lights of the vehicle are activated, and the vehicle is immobile), the vehicle aid request signature may include an ITIS code having a value between 532 and 541. The one or more external devices may determine, based on the value of the ITIS code, the condition of the vehicle that generated the vehicle aid request message. Determining the condition of the vehicle may include determining whether the vehicle aid request message was generated responsive to a user input (e.g., based on the ITIS code having a value equal to 4364) and/or determining whether the vehicle aid request message was generated responsive to satisfaction of the vehicle aid request signal generation condition (e.g., based on the ITIS code having a value between 532 and 541). By determining the vehicle condition based on the content of the vehicle aid request signature, the one or more external devices may provide vehicle condition information to individuals (e.g., first responders) that may respond to the vehicle aid request (e.g., provide aid to the vehicle and/or occupants of the vehicle that generated the vehicle aid request message), with the vehicle condition information providing an indication of the type of aid that may be desired (e.g., medical aid, aid for vehicle degradation and/or immobilization, and so forth).

Receiving the V2X communication including the vehicle aid request message at the one or more external devices may include, at part 822, receiving the V2X communication at a pedestrian mobile device and providing an alert to a user of the mobile device indicating receipt of the vehicle aid request message and the vehicle position. The pedestrian mobile device may process the V2X communication (e.g., via an electronic controller of the pedestrian mobile device including one or processors, memory, and so forth) to retrieve the vehicle aid request signature stored within the V2X communication.

Receiving the V2X communication including the vehicle aid request message at the one or more external devices may also include, at part 824, receiving the V2X communication at a remote vehicle and providing an alert to a user of the remote vehicle indicating receipt of the vehicle aid request message and the vehicle location. The remote vehicle (e.g., receiving vehicle) may be a first responder vehicle, in some examples. In some examples, the vehicle aid request message may be received directly by a V2X communication system of the remote vehicle (e.g., at an antenna included within the V2X communication system of the remote vehicle). The remote vehicle may be similar to, or the same as, the receiving vehicle 104 described above with reference to FIG. 1, the receiving vehicle 204 described above with reference to FIG. 2, and/or the receiving vehicle 304 described above with reference to FIG. 3. The remote vehicle may process the V2X communication (e.g., via the V2X communication system of the remote vehicle including an electronic controller with one or processors, memory, and so forth) to retrieve the vehicle aid request signature stored within the V2X communication.

Receiving the V2X communication including the vehicle aid request message at the one or more external devices may additionally include, at part 826, receiving the V2X communication at a roadside unit and routing the vehicle aid request message via a network to a control center. The roadside unit, network, and control center may be similar to, or the same as, the roadside unit 208, network 210, and response control center infrastructure 212, respectively, described above with reference to FIG. 2, in some examples. The roadside unit may process the V2X communication (e.g., via an electronic controller of the roadside unit including one or processors, memory, and so forth) to retrieve the vehicle aid request signature stored within the V2X communication.

In this way, by generating the V2X communication as a BSM including the vehicle location information and the vehicle aid request signature, a duration between the occurrence of the conditions resulting in the desire for aid and the provision of the aid from the external source may be reduced.

FIG. 6 is shown to scale, although other relative dimensions may be used, if desired.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices, such as the electronic controller 612 and/or systems described with reference to FIGS. 6-7. The methods may be performed by executing stored instructions with one or more logic devices (e.g., processors) in combination with one or more additional hardware elements, such as storage devices, memory, hardware network interfaces/antennas, switches, actuators, clock circuits, and so on. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and sub-combinations of the various systems and configurations, and other features, functions, and/or properties disclosed.

The disclosure provides support for a method, comprising: monitoring a vehicle for a triggering event, and responsive to detection of the triggering event, generating, via a V2X communication module of the vehicle, a BSM in accordance with SAE Surface Vehicle Standard J2735 including a vehicle aid request signature. In a first example of the method, the triggering event is selected from a group consisting of: a user-initiated vehicle aid request, and a concurrent occurrence of a plurality of vehicle events. In a second example of the method, optionally including the first example, the plurality of vehicle events includes a hazard lights event, a disabled vehicle event, and an air bag deployment event. In a third example of the method, optionally including one or both of the first and second examples, the vehicle aid request signature is defined by a BSMpartIIExtension content of the BSM. In a fourth example of the method, optionally including one or more or each of the first through third examples, the vehicle aid request signature includes a DF_EventDescription data frame with an EXT_ITIS_Codes data element includes an ITIS code having a value of 4364. In a fifth example of the method, optionally including one or more or each of the first through fourth examples, the DF_EventDescription data frame is part of a DF_SpecialVehicleExtensions data frame. In a sixth example of the method, optionally including one or more or each of the first through fifth examples, the vehicle aid request signature includes a DE_VehicleEventFlags data element with an eventHazardLights flag, an eventDisabledVehicle flag, and an eventAirBagDeployment flag being set (e.g., having an "ON" value), and wherein the vehicle aid request signature includes a DF_DisabledVehicle data frame including an it is code having a value of between 532 and 541. In a seventh example of the method, optionally including one or more or each of the first through sixth examples, the DE_VehicleEventFlags data element is part of a DF_VehicleSafetyExtensions data frame, and wherein the DF _DisabledVehicle data frame is part of a DF_SupplementalVehicleExtensions data frame. In a eighth example of the method, optionally including one or more or each of the first through seventh examples, the BSM includes location information of the vehicle including vehicle latitude, vehicle longitude, and/or vehicle elevation stored separately from the vehicle aid request signature.

The disclosure also provides support for a method, comprising: processing a V2X BSM in accordance with SAE Surface Vehicle Standard J2735 to retrieve a vehicle aid request signature stored within the BSM. In a first example of the method, the method further comprises: responsive to retrieving the vehicle aid request signature from the BSM, routing data included by the BSM to an external device over a wireless communication network. In a second example of the method, optionally including the first example, the data routed to the external device includes vehicle latitude, vehicle longitude, and/or vehicle elevation. In a third example of the method, optionally including one or both of the first and second examples, the external device is a communication unit of a second vehicle. In a fourth example of the method, optionally including one or more or each of the first through third examples, the wireless communication network is a cellular network. In a fifth example of the method, optionally including one or more or each of the first through fourth examples, the external device is part of an emergency communications control center infrastructure. In a sixth example of the method, optionally including one or more or each of the first through fifth examples, the vehicle aid request signature includes a DF_EventDescription data frame with an EXT_ITIS_Codes data element includes an ITIS code having a value of 4364. In a seventh example of the method, optionally including one or more or each of the first through sixth examples, the vehicle aid request signature includes a DE_VehicleEventFlags data element with an eventHazardLights flag, an eventDisabledVehicle flag, and an eventAirBagDeployment flag being set (e.g., having an "ON" value), and wherein the vehicle aid request signature includes a DF _DisabledVehicle data frame including an ITIS code having a value of between 532 and 541.

The disclosure also provides support for a system, comprising: a transceiver, one or more first processors, and a first non-transitory memory including instructions stored thereon that when executed, cause the one or more first processors to: monitor a condition of a vehicle for a triggering event, and responsive to detection of the triggering event: generate a V2X BSM including a vehicle aid request signature. In a first example of the system, the system further comprises: a receiver, one or more second processors electronically coupled to the receiver, and a second non-transitory memory including instructions stored thereon that when executed, cause the one or more second processors to: responsive to receiving the BSM via the receiver, process the BSM to retrieve the vehicle aid request signature and vehicle location information via the one or more second processors. In a second example of the system, optionally including the first example, monitoring the condition of the vehicle for the triggering event includes monitoring a condition of a vehicle aid request user interface device, and detecting the triggering event includes determining that the vehicle aid request user interface device is in an engaged condition, and wherein monitoring the condition of the vehicle for the triggering event includes monitoring a vehicle hazard lights event flag, a disabled vehicle event flag, and an air bag deployment event flag, and detecting the triggering event includes determining that the each of the vehicle hazard lights event flag, the disabled vehicle event flag, and the air bag deployment event flag is in an ON condition.
As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," and so on. are used merely as labels, and are not intended to impose numerical requirements or a particular positional order on their objects. The following claims particularly point out subject matter from the above disclosure that is regarded as novel and non-obvious.

## Claims

1. A method, comprising:
monitoring a vehicle for a triggering event; and
responsive to detection of the triggering event, generating, via a Vehicle-to-Everything (V2X) communication module of the vehicle, a Basic Safety Message (BSM) in accordance with SAE Surface Vehicle Standard J2735 including a vehicle aid request signature.

2. The method of claim 1, wherein the triggering event is selected from a group consisting of: a user-initiated vehicle aid request; and a concurrent occurrence of a plurality of vehicle events.

3. The method of any preceding claim, wherein the plurality of vehicle events includes a hazard lights event, a disabled vehicle event, and an air bag deployment event.

4. The method of any preceding claim, wherein the vehicle aid request signature is defined by a BSMpartIIExtension content of the BSM.

5. The method of any preceding claim, wherein the vehicle aid request signature includes a DF_EventDescription data frame with an EXT_ITIS_Codes data element having an ITIS code with a value of 4364.

6. The method of claim 5, wherein the DF_EventDescription data frame is part of a DF_SpecialVehicleExtensions data frame.

7. The method of any preceding claim,
wherein the vehicle aid request signature includes a DE_VehicleEventFlags data element with each of an eventHazardLights flag, an eventDisabledVehicle flag, and an eventAirBagDeployment flag being set; and
wherein the vehicle aid request signature includes a DF _DisabledVehicle data frame having an ITIS code with a value of between 532 and 541.

8. The method of claim 7,
wherein the DE_VehicleEventFlags data element is part of a DF_VehicleSafetyExtensions data frame; and
wherein the DF_DisabledVehicle data frame is part of a DF_SupplementalVehicleExtensions data frame.

9. The method of any of the above claims, wherein the BSM includes location information of the vehicle including vehicle latitude, vehicle longitude, and vehicle elevation stored separately from the vehicle aid request signature.

10. A system, comprising:
a transceiver;
one or more first processors; and
a first non-transitory memory including instructions stored thereon that when executed, cause the one or more first processors to:
monitor a condition of a vehicle for a triggering event; and
responsive to detection of the triggering event:
generate a Vehicle-to-Everything (V2X) Basic Safety Message (BSM) including a vehicle aid request signature.

11. The system of claim 10, further comprising:
a receiver;
one or more second processors electronically coupled to the receiver; and
a second non-transitory memory including instructions stored thereon that when executed, cause the one or more second processors to:
responsive to receiving the BSM via the receiver, process the BSM to retrieve the vehicle aid request signature and the vehicle location information via the one or more second processors.

12. The system of claim 10 or 11,
wherein monitoring the condition of the vehicle for the triggering event includes monitoring a condition of a vehicle aid request user interface device, and detecting the triggering event includes determining that the vehicle aid request user interface device is in an engaged condition; and
wherein monitoring the condition of the vehicle for the triggering event includes monitoring a vehicle hazard lights event flag, a disabled vehicle event flag, and an air bag deployment event flag, and detecting the triggering event includes determining that the each of the vehicle hazard lights event flag, the disabled vehicle event flag, and the air bag deployment event flag is in an ON condition.
